# EUROPEAN PATENT APPLICATION

(11) **EP 4 458 447 A1**
(43) Date of publication of application: **06.11.2024**
(21) Application number: 22926202.7
(22) Date of filing: 07.12.2022
(51) Int. Cl.: B01D 35/147, B01D 35/30, B01D 37/04, C02F 5/08, C02F 1/42

(54) **FILTER ASSEMBLY**

(30) Priority: 09.02.2022 KR 20220016634
(71) Applicant: Microfilter Co., Ltd., Chungcheongbuk-do 27856 (KR)
(72) Inventor: JOUNG, Whi Dong, Seoul 06544 (KR); LEE, Hyun Woo, Eumseong-gun Chungcheongbuk-do 27735 (KR); HWANG, Pil Kang, Jincheon-gun, Chungcheongbuk-do 27844 (KR); CHAE, Bo Kyoung, Eumseong-gun Chungcheongbuk-do 27735 (KR); EOM, Ji Yong, Jincheon-gun Chungcheongbuk-do 27844 (KR); YOON, Seok Jeong, Cheongju-si Chungcheongbuk-do 28117 (KR)
(74) Representative: RGTH
(86) International application number: PCT/KR2022/019810
(87) International publication number: WO 2023/153605

(57) **Abstract**

The present invention relates to a filter assembly including a variable bypass flow channel to adjust the content of hard materials, wherein the filter assembly comprises: a filter comprising a bypass flow channel through which raw water is introduced, filtered, and discharged; and a filter head in which the filter is accommodated at a lower portion and which includes flow control means capable of adjusting the amount of the raw water introduced into the bypass flow channel, wherein the filter includes: a housing comprising an inlet through which the raw water is introduced and an outlet through which filtered purified water is discharged to the outside, and which has a stepped structure to be coupled to the filter head; and a filtration unit for filtering the raw water introduced through the inlet from the inside of the housing.

## Description

### Technical field

The present invention relates to a filter assembly. More particularly, the present invention relates to a filter assembly in which the filtering efficiency of the filter is increased, and the content of hard material can be adjusted by comprising a bypass flow channel.

### Background technology

Recently, as environmental pollution, in particular, water pollution, has become a social problem, the use of water purification apparatuses for physically or chemically filtering water to remove impurities is increasing.

Such a water purifier is a device for filtering various components harmful to the human body contained in raw water such as tap water or underground water to convert the raw water into safe and hygienic drinking water. A typical water purification apparatus includes a plurality of filters to filter raw water and provide purified water, thereby removing harmful components included in the raw water and filtering floating materials.

Such a water purification apparatus may be provided with various filters for filtering raw water, and the filters are configured to include various filter media for filtering raw water in a housing formed in a generally hollow cylindrical shape. The filter may include a pre-carbon filter, an ultrafiltration filter, a reverse osmosis filter, a sediment filter, a post-carbon filter, and the like. Among various filters, the carbon filter is a filter for absorbing small contaminants, residual chlorine, volatile organic compounds, or odor-generating particles. Such a conventional carbon filter has a limitation in the absorption ability of activated carbon by using activated carbon and has a problem in that it cannot remove fine impurities such as heavy metals.

In addition, the filter further includes removal means for removing ionic substances such as calcium ions and magnesium ions causing scale formation, and thus there is a problem in that the number of components constituting the filter increases, thereby increasing the manufacturing process and manufacturing cost.

In addition, in recent years, more and more consumers want to use hard materials such as calcium ions and magnesium ions by adjusting the content rather than completely removing the hard materials. In the conventional filter, raw water is sequentially filtered by a flow channel, so it is difficult to control the content of the hard material.

### [Prior art document]

### [Patent document]

(Patent Document 0001) Korean Patent Laid-open Publication No. 10-2019-0052178 (Publication Date: March 26, 2021)

### Summary of Invention

### Technical problem

An object of the present invention is to provide a filter assembly with improved filtering performance.

An object of the present invention is to provide a filter assembly with improved productivity due to a reduced manufacturing process and manufacturing cost.

An object of the present invention is to provide a filter assembly that suppresses the occurrence of scale.

An object of the present invention is to control the content of the hard material by forming a bypass flow channel.

The technical problems of the present invention are not limited to the technical problems mentioned above, and other technical problems that are not mentioned will be clearly understood by those skilled in the art from the following descriptions.

### Solution to Problem

According to an embodiment of the present invention, a filter assembly comprises: a filter comprising a bypass flow channel pipe formed to introduce raw water, filter the raw water, and discharge the filtered raw water; and a filter head which accommodates the filter at a lower portion and comprises flow rate control means controlling the inflow amount of the raw water introduced into the bypass flow channel pipe, wherein the filter includes: a housing comprising an inlet through which the raw water is introduced, an outlet through which filtered purified water is discharged to the outside, and a stepped structure to be coupled to the filter head; and a filtration unit filtering the raw water introduced through the inlet inside the housing.

According to an embodiment of the present invention, the filtration unit may include a first filtration unit which is included inside the housing and removes the hard scale inducing material from the raw water through a first filtration member; and a second filtration unit which filters one or more of the raw water and the raw water from which the hard scale inducing material has been removed.

According to an embodiment of the present invention, the second filtration unit may include a second filter bracket including a through portion into which the raw water pipe is inserted, and comprising a flow channel through which the raw water, from which the hard scale-inducing material has been removed through the first filtration unit, passes.

According to an embodiment of the present invention, the second filter bracket may include an upper cap through which the raw water pipe is inserted and which includes a purified water unit in fluid communication with the outlet; and a coupling unit to which the upper cap is coupled, and the upper cap may include a second fixing unit configured to fix the second filtration member.

According to an embodiment of the present invention, the upper cap and the second filter bracket may include a bypass flow channel through which raw water is introduced by the flow rate control means, and the raw water may be introduced into the bypass flow channel by the flow rate control means to adjust the removal rate of the hard scale-inducing material.

According to an embodiment of the present invention, the filter may include a first filter bracket included in an inner lower end of the housing and into which the raw water pipe is inserted, and the first filter bracket may have a flow channel formed therein so that the raw water discharged from the raw water pipe flows to the first filtration unit.

According to an embodiment of the present invention, the first filter bracket may include a stopper configured to prevent sagging of the first filter bracket.

According to an embodiment of the present invention, the second filtration unit may further include a scale suppressing unit configured to suppress generation of scale.

According to an embodiment of the present invention, the second filtration member may be included as a carbon block for filtering chlorine, an organic compound, a heavy metal, or the like.

According to an embodiment of the present invention, the first filtration member may be included as an ion exchange resin for removing the hard scale-inducing material.

According to an embodiment of the present invention, the second filter bracket may include a first fixing unit configured to fix the second filtration unit to one side surface thereof.

According to an embodiment of the present invention, the filter may include a tube configured to surround the raw water pipe, and one end of the tube may be inserted into the second filter bracket.

According to an embodiment of the present invention, the scale suppressing unit may be formed of phosphate that coats a pipe to suppress scale generation.

### Effects of the invention

A filter according to an embodiment of the present invention may provide a filter with improved filtration performance by including a carbon block.

The filter according to an embodiment of the present invention may suppress the occurrence of scale.

The filter according to an embodiment of the present invention may provide a water filter with improved productivity due to an improved structure of the housing.

The filter assembly according to an embodiment of the present invention may provide a filter that controls the content of the hard material.

### Brief description of drawings

FIG. 1 is a perspective view of a filter assembly according to an embodiment of the present invention,
FIG. 2 is a cross-sectional view of a filter according to an embodiment of the present invention,
FIG. 3 is a partially enlarged cross-sectional view of a filter according to an embodiment of the present invention,
FIG. 4 is a cross-sectional view of a second filter bracket according to an embodiment of the present invention,
FIG. 5 is a plan view and a ground view of the second filter bracket according to an embodiment of the present invention,
FIG. 6 is a cross-sectional view illustrating a coupling structure of a raw water pipe, the second bracket, and an upper cap according to an embodiment of the present invention,
FIG. 7 is a bottom cross-sectional view of a filter according to an embodiment of the present invention,
FIG. 8 is a perspective view of the first filter bracket, and
FIG. 9 is a cross-sectional view illustrating a flow of raw water in which the content of a hard material is adjustable in flow control means of a filter assembly according to an embodiment of the present invention.

### Description of Embodiments

Hereinafter, an embodiment of a filter assembly according to the present invention will be described in detail with reference to the accompanying drawings.

It should be noted that, in adding reference numerals to components of each drawing, the same components are denoted by the same reference numerals as possible even though they are illustrated in different drawings. In addition, in describing the embodiment of the present invention, when it is determined that a detailed description of a related known configuration or function interferes with the understanding of the embodiment of the present invention, the detailed description thereof will be omitted.

In describing the components of the embodiments of the present invention, terms such as first, second, A, B, (a), (b), and the like may be used. Such terms are only for distinguishing the constituting elements from other constituting elements, and the essence, order, or sequence of the corresponding constituting elements is not limited by the terms. Unless otherwise defined, all terms used herein, including technical or scientific terms, have the same meaning as commonly understood by those skilled in the art. It will be further understood that terms, such as those defined in commonly used dictionaries, should be interpreted as comprising a meaning that is consistent with their meaning in the context of the relevant art and will not be interpreted in an idealized or overly formal sense unless expressly so defined herein.

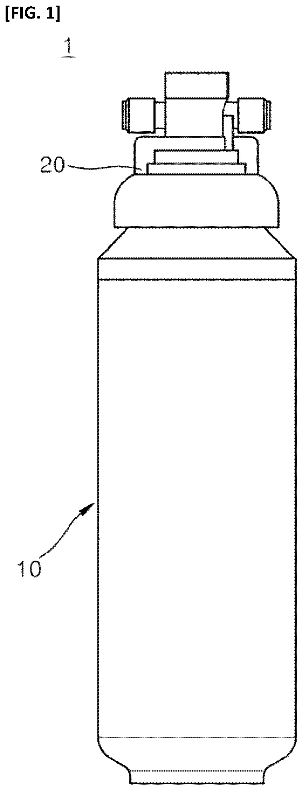

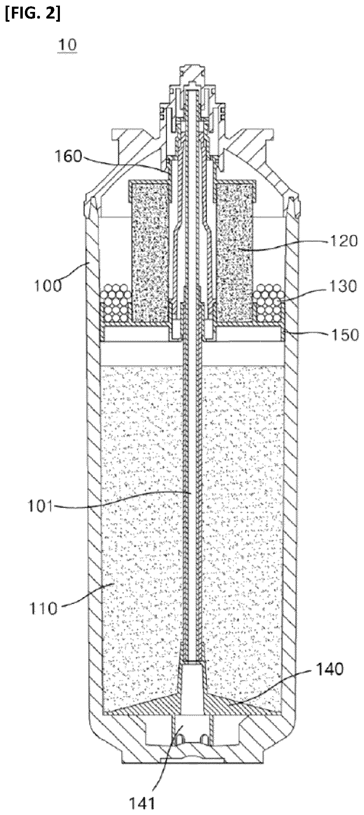

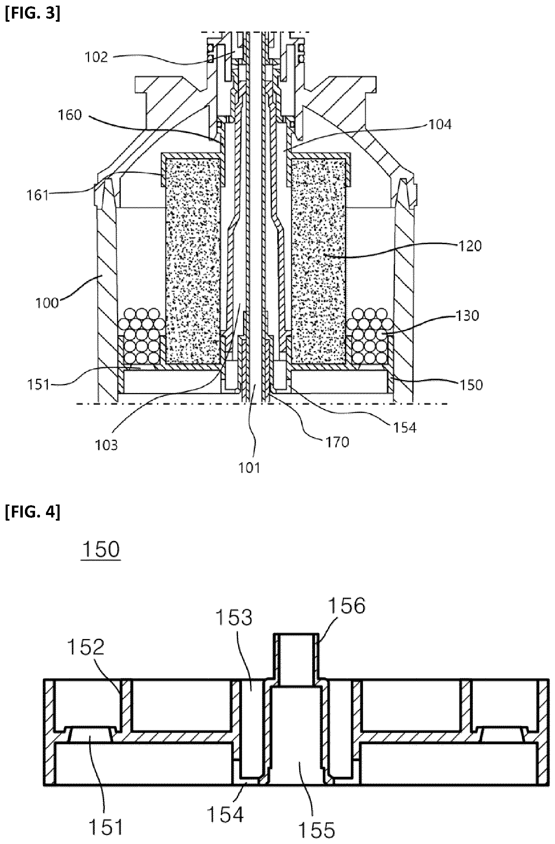

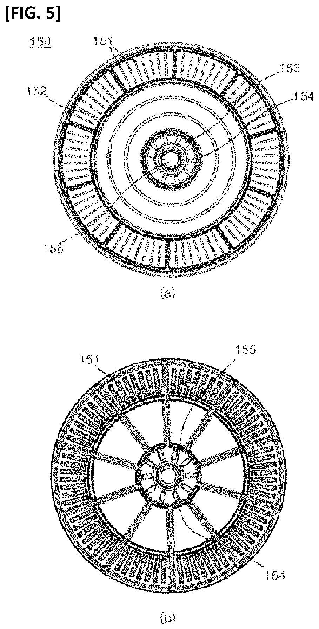

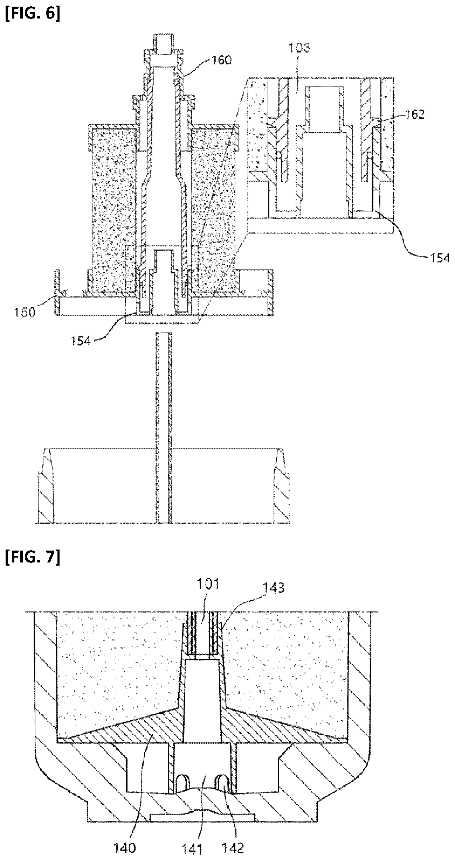

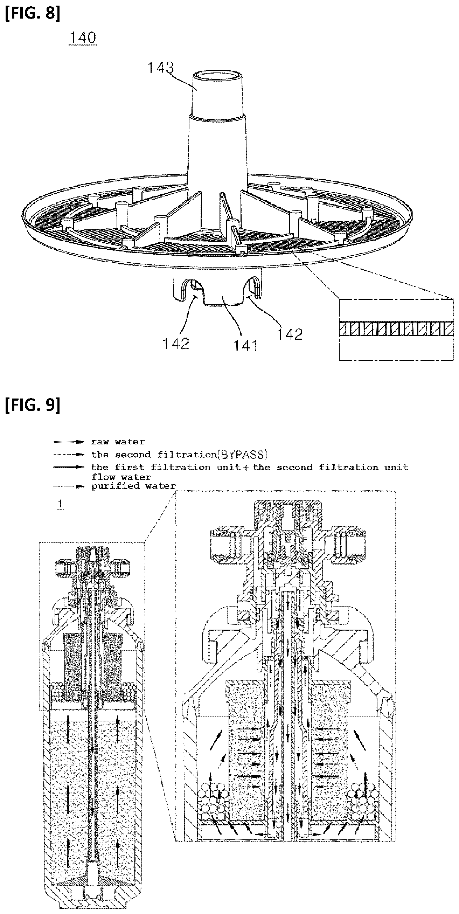

FIG. 1 is a perspective view of a filter assembly according to an embodiment of the present invention, FIG. 2 is a cross-sectional view of a filter according to an embodiment of the present invention, FIG. 3 is a partially enlarged cross-sectional view of a filter according to an embodiment of the present invention, FIG. 4 is a cross-sectional view of a second filter bracket according to an embodiment of the present invention, FIG. 5 is a plan view and a ground view of the second filter bracket according to an embodiment of the present invention, FIG. 6 is a cross-sectional view illustrating a coupling structure of a raw water pipe, the second bracket, and an upper cap according to an embodiment of the present invention, FIG. 7 is a lower cross-sectional view of a filter according to an embodiment of the present invention, and FIG. 8 is a perspective view of a first filter bracket.

Referring to FIGS. 1 to 8, a filter assembly 1 may include a filter 10 comprising a bypass flow channel through which raw water is introduced, filtered, and discharged, and a filter head 20 comprising the filter 10 coupled to a lower portion thereof to be accommodated therein, and including flow rate control means capable of adjusting an inflow amount of raw water introduced into a bypass inlet 102.

The filter 10 may include a housing 100 comprising an inlet through which raw water is introduced and an outlet through which filtered purified water is discharged to the outside and comprising a stepped structure to be coupled to the filter head 20, and a filtration unit filtering the raw water introduced through the inlet in the housing.

The housing 100 may be configured to include a head coupling unit that vertically protrudes to form a stepped structure and is coupled to the filter head 20. The housing 100 may be configured in a cylindrical shape with a hollow inside, and a filtration member may be accommodated. The head coupling unit may include an inlet through which raw water is introduced, a bypass inlet 102 which is controlled by flow rate control means included in the filter head 20 and through which raw water is introduced, and an outlet through which purified water is discharged.

The filter 10 may be configured to include a filtration unit that filters the raw water introduced through the inlet and the bypass inlet 102. The filtration unit may be configured to include a first filtration unit 110 which is included in the housing 100 and removes the hard scale-inducing material from the raw water through a first filtration member, and a second filtration unit 120 which is positioned at an upper end of the first filtration unit 110 and includes a second filtration member to filter one or more of the raw water and the raw water from which the hard scale-inducing material has been removed.

The filter 10 may include a first filtration unit 110 for removing the hard scale-inducing material. The first filtration unit 110 may include a first filtration member for removing the hard scale-inducing material. For example, the first filtration member may be formed of an ion exchange resin to remove the hard scale-inducing material included in the raw water such as calcium ions and magnesium ions.

The first filtration unit 110 may remove hard scale-inducing materials. Scale is a foreign substance generated by bonding cations and anions dissolved in water, and forming precipitates by precipitating salts, which are chemical bonds of ions, and adhering to the surface of a membrane, a pipe, etc. For example, the first filtration member constituting the first filtration unit 110 may be included in an ion exchange resin, and the ion exchange resin may remove a hard scale-inducing material that may be included in raw water. An ion-exchange resin is a resin that acts as a medium for ion exchange, and is a resin that removes hard scale-inducing materials by including anions or cations. Since the first filtration unit 110 is formed of an ion exchange resin, it is possible to remove the hard scale-inducing material contained in the raw water.

The filter 10 may include a first filter bracket 140. The first filter bracket 140 may be included in the lower end of the first filtration unit 110 and may be coupled to the housing 100. The first filter bracket 140 may include a first raw water pipe insertion unit 143 into which the raw water pipe 101 and the tube are inserted. The raw water pipe 101 through which raw water flows into the first raw water pipe insertion unit 143 and the tube 170 surrounding the raw water pipe 101 may be inserted, and at least one flow channel may be formed in the first filter bracket 140 so that raw water discharged from the raw water pipe 101 through the first raw water pipe insertion unit 143 may be directed to the first filtration unit 110.

The first filter bracket 140 may have a flow channel in fluid communication with the raw water pipe 101. The first filter bracket 140 may be coupled to the housing 100 to support the first filtration unit 110, and raw water discharged from the raw water pipe 101 may be introduced into the first filtration unit 110 through a flow channel formed in the first filter bracket 140 for hard scale-inducing materials to be removed.

The first filter bracket 140 may include a stopper 141 to prevent the first filter bracket 140 from sagging. The stopper 141 may be formed on the first filter bracket 140 and coupled to the housing 100 to support the first filter bracket 140 and to prevent the first filter bracket 140 from sagging. The stopper 141 may be formed with at least one first filtration flow channel 142 through which the raw water discharged from the raw water pipe 101 flows out, the raw water discharged from the raw water pipe 100 through the first filtration flow channel 142 may pass through at least one flow channel formed in the first filter bracket 140 to be introduced into the first filtration unit 110, and the hard scale-inducing material may be removed from the raw water passing through the flow channel formed in the first filter bracket 140 by the first filtration unit 110.

The filter 10 may include a second filtration unit 120 to filter raw water and the raw water from which hard scale-inducing materials have been removed. For example, the second filtration unit120 may be formed of a carbon block but is not limited thereto. The carbon block is formed in the form of a block by extruding activated carbon which may absorb residual chlorine, heavy metals, organic compounds, odors, and the like contained in water. The carbon block formed by extruding or compressing the activated carbon may have an increased filtering ability than the activated carbon and the working environment of a manufacturing site such as dust blowing may be improved.

The filter 10 may include a second filter bracket 150. The second filter bracket 150 may be included between the first filtration unit 110 and the second filtration unit 120. The second filter bracket 150 may be included between the first filtration unit 110 and the second filtration unit 120 to vertically partition the inside of the housing 100. The inside of the housing 100 is divided into upper and lower portions, and the first filtration unit 110 may be located at a lower portion to remove the hard scale-inducing material, and the second filtration unit 120 may be included at an upper portion to filter raw water and the raw water from which the hard scale-inducing materials are removed. The housing 100 is vertically partitioned by the second filter bracket 150, and the inflow of raw water is controlled by the filter head 20 including the flow rate control means, so that the amount of raw water flowing toward the first filtration unit 110 is controlled, thereby controlling the content of the hard material.

A second bypass flow channel 154 may be formed in the second filter bracket 150. The amount of raw water introduced through the bypass inlet 102 of the filter 10 may be adjusted by the flow rate control means of the filter head 20 so that raw water may be introduced into the second bypass flow channel 154 and the amount of raw water passing through the first filtration unit 110 may be adjusted.

The second filter bracket 150 may have at least one second filtration flow channel 151 through which the raw water supplied through the second bypass flow channel 154 and the raw water from which the hard scale-inducing material is removed in the first filtration unit may be introduced into the second filtration unit 120. The second filtration flow channel 151 is formed and at least one or more of the raw water supplied through the second bypass flow channel 154 and the raw water from which the hard scale inducing material is removed may be introduced into the second filtration unit 120.

The second filter bracket 150 may include a first fixing unit 152 into which the second filtration unit 120 is inserted and fixed. The second filtration unit 120 may be inserted into and fixed to the first fixing unit 152, and raw water and the raw water, from which the hard scale-inducing materials are removed through the first filtration unit 110, may be introduced into the second filtration unit 120 through the second filtration flow channel 152 included in the second filter bracket 150 to be filtered into purified water.

The second filtration unit 120 may include a scale suppressing unit 130. The scale suppressing unit 130 may be included in an upper end of the second filtration flow channel 152 and an outer surface of the second filtration unit 120. The scale suppressing unit 130 may be included in the upper end of the second filtration flow channel 152 included in the second filter bracket 150 to suppress the generation of scales of the raw water and the raw water filtered in the first filtration unit 110. For example, the scale suppressing unit 130 may include phosphate (PO₄³⁻) but is not limited thereto. When a certain concentration of phosphate is added, the pipe is coated so that the generation of scale can be suppressed.

The second filtration unit 120 may include an upper cap 160 through which the raw water pipe 101 is inserted and which fluidly communicates with the outlet. The upper cap 160 may be hot-melt bonded to the second filter bracket 150, and may include a second fixing unit 161 into which the second filtration unit 120 is inserted and coupled. The upper cap 160 may be coupled to the housing 100 by being coupled to the second filter bracket 150. The coupling unit of the upper cap and the second filter bracket may be sealed by including an O-ring. The coupling unit between the upper cap 160 and the second filter bracket 150 may be sealed by the O-ring to prevent the raw water from leaking without being filtered.

The upper cap 160 may include a water outlet 104 in fluid communication with the outlet unit. The water outlet 104 may be formed adjacent to the second filtration unit 120, and purified water filtered by the second filtration unit 120 may be discharged to the outside through the water outlet 104.

The upper cap 160 may include a first bypass flow channel 103. The first bypass flow channel 103 and the second bypass flow channel 154 may be in fluid communication, and the amount of raw water introduced through the bypass inlet 102 of the filter 10 may be adjusted by the flow rate control means of the filter head 20. Raw water may be introduced into the second bypass flow channel 154 through the first bypass flow channel 103 so that the amount of raw water passing through the first filtration unit 110 may be adjusted. The amount of raw water passing through the raw water pipe 101 may be controlled, and as the amount of raw water passing through the raw water pipe 101 is controlled, the raw water filtered through the first filtration unit 110 may be controlled, and accordingly the content of the hard material contained in the purified water filtered and discharged from the filter 10 may be adjusted.

The upper cap 160 may include a stepped unit 162. One side surface of the coupling unit inserted into and coupled to the second filter bracket 150 may protrude outward to form a stepped unit 162, and the stepped unit 162 may be locked to the upper cap insertion unit 153 formed in the second filter bracket to prevent the upper cap 160 from being excessively inserted into the second filter bracket 150.

The filter 10 may include a raw water pipe 101, and the raw water pipe 101 may be inserted into the second filter bracket 150 and the first filter bracket 140. The second filter bracket 150 may be provided with a second raw water pipe insertion unit 156 into which the raw water pipe 101 is inserted, and the raw water pipe 101 may be inserted into and passed through the second raw water pipe insertion unit 156.

The raw water pipe 101 may include a tube 170 surrounding the raw water pipe 101, and the second filter bracket 150 may include a tube insertion unit 155 into which one end of the tube 170 surrounding the raw water pipe 101 is inserted. One end of the tube included in the raw water pipe 101 may be inserted into the tube insertion unit 155 included in the second filter bracket 150 to further fix the raw water pipe 101 and the second filter bracket 150. For example, the tube 170 may be made of Polypropylene (pp). One end of the raw water pipe 101 may be connected to be in fluid communication with the water inlet, and the other end of the raw water pipe may be coupled to the first raw water pipe insertion unit 143 included in the first filter bracket 140 so that the raw water may be introduced into the first filtration unit 110 through the first filter bracket 140.

The filter head 20 may be coupled to the filter 10 and be in fluid communication with an inlet unit, a bypass inlet unit 102, and an outlet unit formed in the filter by forming an inlet port and an outlet port. Raw water may be introduced into the inlet port and introduced into the filter 10 and purified water filtered by the filter 10 may be discharged through the outlet port.

The filter head 20 may include flow rate control means. The flow rate control means may adjust the opening and closing range of the bypass inlet hole by manipulating an opening and closing dial on the filter head to adjust the inflow amount of raw water flowing into the bypass inlet 102 in stages. The flow rate control means may control the amount of raw water flowing into the bypass inlet according to the rotation radius of the opening/closing dial. The amount of raw water introduced into the bypass inlet 102 may be adjusted by the flow rate control means and the content of the hard material included in the purified water may be adjusted according to the amount of raw water introduced into the bypass inlet 102.

FIG. 9 is a cross-sectional view illustrating a flow of raw water capable of adjusting a content of a hard material in flow rate control means of a filter assembly according to an embodiment of the present invention.

According to FIG. 9, the content of the hard material may be controlled by the flow rate control means. The raw water introduced into the filter assembly 1 may be controlled by flow rate control means included in the filter head 20 and may be introduced through the raw water pipe 101 and the bypass inlet 102.

The raw water introduced through the raw water pipe 101 may be discharged from the first filter bracket 140 and introduced into the first filtration unit 110, and the hard scale-inducing material may be removed by the first filtration unit 110. The raw water passing through the first filtration unit 110 may be introduced into the second filtration unit 120 through the second filtration flow channel 151 included in the second filter bracket 150 and may be filtered into purified water. The purified water may be discharged to the outside through the water outlet 104.

The raw water introduced into the filter 10 through the bypass inlet 102 may be introduced into the first bypass flow channel 103, may be introduced into the housing 100 through the first bypass flow channel 103 and the second bypass flow channel 154, and may be introduced into the second filtration unit 120 through the second filtration flow channel 151. As the raw water introduced through the bypass inlet 102 increases, the content of the hard material may increase. The raw water introduced through the bypass inlet 102 may be filtered into purified water by the second filtration unit 120 and discharged to the outside through the water outlet 104.

The embodiment of the present invention is not necessarily limited to the above-described embodiment, and it will be natural that various modifications and implementations in an equivalent range by those skilled in the art to which the present invention belongs are possible. Therefore, it will be said that the true scope of the present invention is determined by the Claims described below.

### Code Description

1: Filter assembly
10: Filter
20: Filter head
100: Housing
101: Raw water pipe
102: Bypass inlet
103: First bypass flow channel
104: Water outlet
110: First filtration unit
120: Second filtration unit
130: Scale suppressing unit
140: First filter bracket
141: Stopper
142: First filtration flow channel
143: First raw water pipe insertion unit
150: Second filter bracket
151: Second filtration flow channel
152: First fixing unit
153: Upper cap insertion unit
154: Second bypass flow channel
155: Tube insertion unit
156: Second raw water pipe insertion unit
160: Upper cap
161: Second fixing unit
162: Stepped unit
170: Tube

## Claims

1. A filter assembly comprising:
a filter comprising a bypass flow channel pipe formed therein to introduce raw water, filter the raw water, and discharge the filtered raw water; and
a filter head accommodating the filter at a lower portion thereof and comprising flow rate control means controlling an inflow amount of the raw water introduced into the bypass flow channel pipe,
wherein the filter includes a housing comprising an inlet through which the raw water is introduced and an outlet through which filtered purified water is discharged to the outside, and comprising a stepped structure to be coupled to the filter head; and a filtration unit filtering the raw water introduced through the inlet in the housing.

2. The filter assembly of claim 1, wherein the filtration unit comprises a first filtration unit included inside the housing and configured to remove the hard scale-inducing material from the raw water by a first filtration member; and a second filtration unit configured to filter one or more of the raw water and the raw water from which the hard scale-inducing material has been removed.

3. The filter assembly of claim 1, wherein the second filtration unit comprises a second filter bracket comprising a through portion into which the raw water pipe is inserted, and comprising a flow channel through which the raw water, from which the hard scale inducing material has been removed through the first filtration unit, passes.

4. The filter assembly of claim 2, wherein the second filter bracket comprises an upper cap configured to have the raw water pipe inserted therethrough and comprising a purified water unit in fluid communication with the outlet; and a coupling unit to which the upper cap is coupled, and wherein the upper cap comprises a second fixing unit configured to fix the second filtration member.

5. The filter assembly of claim 1, wherein the upper cap and the second filter bracket comprise a bypass flow channel through which raw water is introduced by the flow rate control means, and wherein the removal rate of the hard scale-inducing material is adjusted as raw water is introduced into the bypass flow channel by the flow rate control means.

6. The filter assembly of claim 1, wherein the filter comprises a first filter bracket included in an inner lower end portion of the housing and into which the raw water pipe is inserted, and wherein the first filter bracket has a flow channel through which the raw water discharged from the raw water pipe flows to the first filtration unit.

7. The filter assembly of claim 6, wherein the first filter bracket comprises a stopper configured to prevent sagging of the first filter bracket.

8. The filter assembly of claim 1, wherein the second filtration unit further comprises a scale suppressing unit configured to suppress generation of scale.

9. The filter assembly of claim 1, wherein the second filtration member comprises a carbon block configured to filter chlorine, an organic compound, a heavy metal, or the like.

10. The filter assembly of claim 1, wherein the first filtration member is comprised of an ion exchange resin that removes the hard scale-inducing material.

11. The filter assembly of claim 2, wherein the second filter bracket comprises a first fixing unit configured to fix the second filtration unit to one side surface thereof.

12. The filter assembly of claim 2, wherein the filter comprises a tube surrounding the raw water pipe, and wherein one end portion of the tube is inserted into the second filter bracket.

13. The filter assembly of claim 8, wherein the scale suppressing unit is formed of a phosphate that coats a pipe to suppress generation of the scale.
